## Europäisches Patentamt
## European Patent Office
## Office européen des brevets

(19)

(11) Publication number: **0 084 603**
**A1**

# EUROPEAN PATENT APPLICATION

(12)

(21) Application number: **82109410.9**

(22) Date of filing: **12.10.82**

(51) Int. Cl.³: **G 02 F 1/17, G 09 G 3/16**

(30) Priority: **25.01.82 US 342335**

(43) Date of publication of application: **03.08.83**
**Bulletin 83/31**

(84) Designated Contracting States: **BE CH DE FR GB IT LI NL SE**

(71) Applicant: **AMERICAN CYANAMID COMPANY, 1937 West Main Street P.O. Box 60, Stamford Connecticut 06904 (US)**

(72) Inventor: **Giglia, Robert Domenico, 14 Chester Drive, Rye New York 10580 (US)**

(74) Representative: **Wächtershäuser, Günter, Dr., Tal 29, D-8000 München 2 (DE)**

(54) **Multiplexing driving method and system for an electrochromic display.**

(57) A novel method and system are disclosed for multiplex addressing of the electrochromic elements in a matrix array which substantially eliminates cross talk. The method comprises reverse addressing, i.e. supplying erase information to the off points of the matrix, while addressing the on points, i.e. providing write information to the points desired to be colored. The electrochromic elements are arranged in columns and rows to form the matrix and appropriately controlled drivers supply the desired write and erase voltages to the elements.

0084603

## MULTIPLEXING DRIVING METHOD AND SYSTEM
## FOR AN ELECTROCHROMIC DISPLAY

### TECHNICAL FIELD OF THE INVENTION

This invention relates to electrochromic display devices and more particularly to a novel method and system for multiplex addressing of the electrochromic elements in order to minimize cross talk.

### BACKGROUND OF THE INVENTION

Electrochromic display devices have become increasingly popular for displaying alpha-numeric and other types of display data. Such display devices typically comprise a layered arrangement of materials including an electrochromic electrode, ion-conducting layer and counter-electrode. When electrical signals are selectively applied to the electrochromic electrode and counter-electrode, changes in the optical absorption characteristic of the electrochromic material is produced. By selectively applying electrical potentials of of predetermined magnitude and polarity, color changes can be produced and removed. See for example commonly assigned U.S.

Patent Nos. 3,521,941, 3,704,057, 3,708,220, 3,843,232, 3,847,468, 3,879,108 and 4,088,395.

Electrochromic elements can be arranged in an X-Y matrix configuration. The electrochromic elements comprising the matrix can be selectively addressed by using multiplexing techniques. In this regard, see commonly assigned U.S. Patent Nos. 4,099,839 and 4,129,861. However, when multiplexing techniques are used to address electrochromic elements in a matrix configuration, a cross talk problem arises whereby elements adjacent to the element intended to be addressed may also fully or partially color due to alternate current paths. U.S. Patent No. 4,129,861 is addressed to this cross talk problem and discloses a matrix incorporating diodes which increase the threshold voltage of each display element of electrochromic material. Thus, while the circuit disclosed in U.S. Patent No. 4,129,861 eliminates the cross talk problem, it does so at the expense of adding additional associated semiconductor elements which increase the cost and complexity of the overall device. Accordingly, it would be desirable to provide a method for multiplex addressing a matrix array of electrochromic elements in a simple two electrode system without the use of associated semiconductor elements to increase the threshold voltage.

## SUMMARY OF THE INVENTION

In accordance with the present invention, a novel method is provided for multiplex addressing the electrochromic elements in a matrix array which substantially eliminates the naturally occuring cross talk. The novel method comprises continuously reverse addressing, i.e. supplying erase information to the off points in the matrix, while addressing the on points, i.e. providing write information to the points desired to be colored. The reverse addressing is accomplished by supplying erase information to the electrochromic display elements for which no coloring is desired. This erase information is in the form of a voltage which is opposite in polarity to the write voltage supplied to the electrochromic display elements for which coloring is desired. Alternatively, for electrochromic displays where the counter-electrode has an electrode potential more negative than the electrochromic electrode, the erase information can comprise a voltage equal to the voltage between the counter electrode and the electrochromic electrode. This can be done merely by short circuiting the electrochromic electrode to the counter-electrode for that electrochromic element. In either case, each electrochromic element in a display receives write information and erase information during an addressing sequence, thereby reducing cross talk between the electrochromic elements in a display.

According to a preferred form of the invention, the display matrix has, for example, five rows and seven columns to form a five by seven dot matrix. The electrodes are connected to the column lines and the counter-electrodes are connected to the row lines. The column lines are sequentially addressed one at a time. Write information is provided at each row line for all electrochromic elements in the address column line for which writing is desired. Also, erase information is provided at the row lines of the electrochromic elements which do not receive write information.

In one embodiment, write and erase information pulses are supplied simultaneously so that every electrochromic element along the addressed column will receive either write information or erase information at the same time. In an alternate form of the invention, the electrochromic elements along the address column which are desired to be written or colored are supplied with write information during a first time interval and the erase information is supplied to the remainder of the electrochromic elements during a second time interval. Thus, the pulses supplying the erase information may be applied before or after the pulses supplying the write information. In either embodiment, each electrochromic element receives write or erase information periodically so that cross talk is substantially eliminated.

Numerous other advantages and features of the present invention will become readily apparent from the following detailed description of the method of the invention, from the claims, and from the accompanying drawings.

## BRIEF DESCRIPTION OF THE DRAWINGS

Fig. 1 illustrates an electrochromic matrix in accordance with the invention having the electrochromic elements arranged in five columns and seven rows, in exploded, perspective view; and

Fig. 2 is a electrical block diagram of the novel system of the invention including the electrochromic matrix, addressing means, and write and erase signal driver means.

## DETAILED DESCRIPTION OF THE PREFERRED EMBODIMENT

While this invention can be embodied in many different forms, there is shown in the drawings and will herein be described in detail one specific embodiment, with the understanding that the present disclosure is to be considered as an exemplification of the principles of the invention and is not intended to limit the invention to the embodiment illustrated.

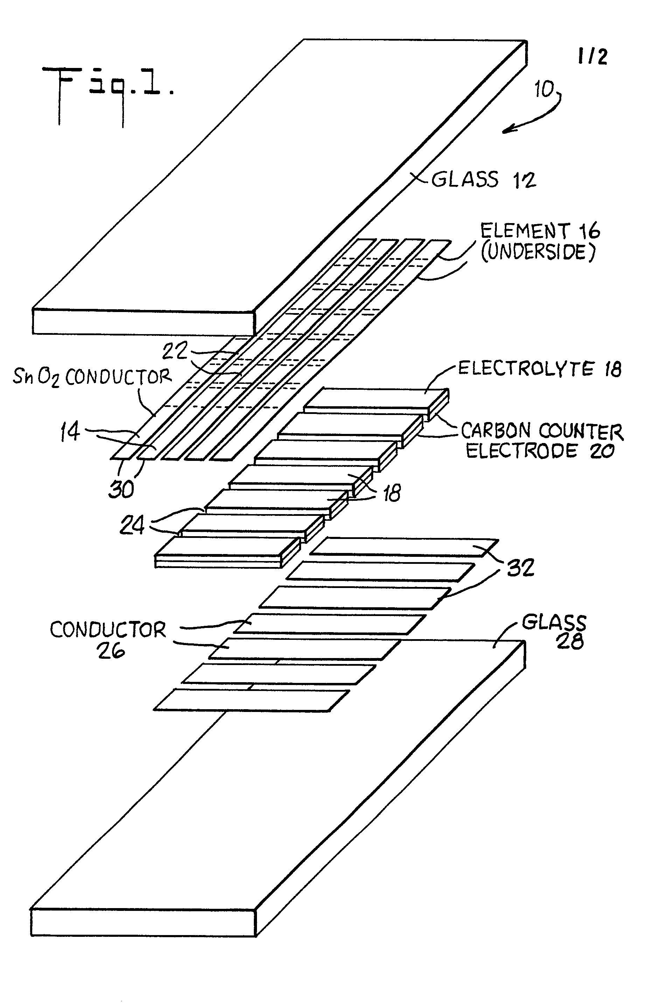

Fig. 1 illustrates, in perspective view, an electrochromic matrix display device with the layers separated for purposes of illustration. The electrochromic display device 10 comprises a substrate of glass 12 and columns 14 of tin oxide conductive material. Deposited on the underside of the columns 14 of tin oxide conductive material are separate areas of electrochromic material 16 which are preferably tungsten oxide. Rows 18 of ion-conductive material (preferably a polymer electrolyte film) and rows 20 of a counter-electrode material (preferably a carbon paper) are arranged at right angles to the columns 14 of tin oxide conductive material. The columns 14 of tin oxide conductive material are separated by spaces or gaps 22, and the rows 18 of electrolyte and rows 20 of counter-electrode material are separated by spaces or gaps 24 so that when these material are sandwiched together the areas or elements of electrochromic material 16 will be at the intersection points of the rows and columns. Beneath the carbon counter-electrode material are rows 26 of tin oxide conductive material which also forms a part of the counter-electrode of the overall device. A backing layer 28, preferably glass, is the final layer of the electrochromic display device 10.

The ends 30 of the rows 14 of tin oxide conductive material provide the terminals for the conductor leads for the electrochromic elements, whereas the ends 32 of the rows 26 of tin oxide conductive material provide the terminal connections for the counter-electrode leads in the device.

The electrochromic display device 10 of Fig. 1 can be produced using methods known to those skilled in the art. The counter-electrode may comprise an oxidizing agent which has an oxidizing electrode potential more negative than the electrochromic layer, thereby facilitating erasing or uncoloring of an individual electrochromic element 16 merely by short circuiting the column terminal 30 and the row terminal 32 for the respective column and row containing the electrochromic element. Examples of suitable oxidizing agents are manganese dioxide $(MnO_2)$ and chromic oxide $(CrO_3)$.

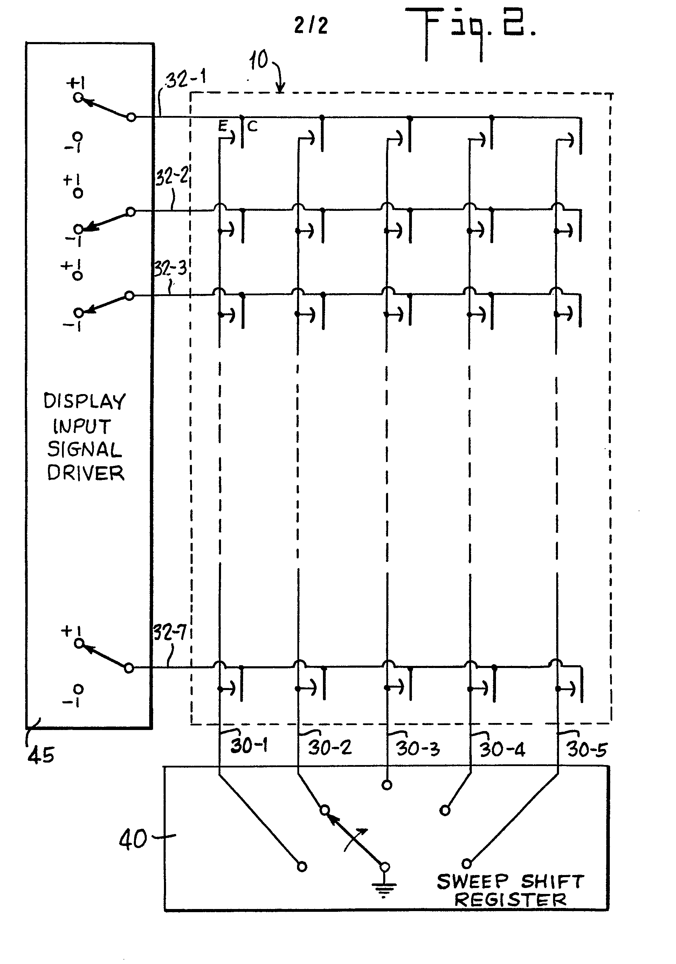

Referring now to Fig. 2, the electrical system for driving the electrochromic display device 10 is shown in schematic form. Each counter-electrode terminal 32-1 through 32-7 is connected to the counter-electrodes for the electrochromic elements along that row. Similarly, each column electrode 30-1 through 30-5 is connected to the electrodes of all of the electrochromic elements along that column.

A sweep shift register 40 cyclically and sequentially addresses the column lines 30 one at a time by connecting each column line in turn to ground or zero potential. A display input signal driver 45 connects the counter-electrode terminals 32-1 through 32-7 to a voltage signal of either +1 volts (for coloring or writing) or -1 volts (for erasing) depending upon whether the electrochromic element in that respective row is to be written or erased.

If the material of the counter-electrode is more electronegative than the electrochromic material, erase information can be provided merely by connecting the respective row terminal 32-1 through 32-7 to ground or zero voltage reference potential. In such case, both the counter-electrode and the electrode for that particular display element will be connected to ground and effectively short-circuited and thereby will be erased.

The display input signal driver 45 is shown schematically as a series of switches connecting respective rows of the matrix to positive or negative voltages and may, for example, be the output of a data processing system. The driver may provide write information over a time period which overlaps, either totally or partially, with the time period over which the erase information is provided. For example, write information may be supplied to rows 32-1 and 32-7 during the same time interval that erase information is supplied to rows 32-2 to 32-6, as shown in Fig. 2. Alternatively, the erase and write information can be supplied over associated time periods which do not overlap. In this mode, one sweep of the shift register 40 provides a write cycle while a second sweep of the shift register proves an erase cycle.

Furthermore, in either the simultaneous addressing case or the sequential addressing case, the write information and/or the erase information at each row line may be supplied as a series of relatively small pulses instead of one single large pulse.

In the case where the erase and write information are supplied during non-overlapping time periods, the sweep frequency of register 40 is such that sequential writing and erasing of the matrix elements occur more rapidly than the visual response time of the human eye.

From the foregoing, it will be observed that numerous variations and modifications may be effected without departing from the true spirit and scope of the novel concept of the invention. For example, it will be recognized that the principles of the invention are not limited to the 5x7 array illustrated, but may be extended to arrays of larger numbers of individual electrochromic elements and different proportions. It is to be understood that no limitation with respect to the specific apparatus and method illustrated herein is intended or should be inferred. It is of course intended to cover by the appended claims all such modifications as fall within the scope of the claims.

WHAT IS CLAIMED IS:

1. A method for driving an electrochromic display matrix having the electrochromic elements arranged in at least two columns and two rows in a configuration suitable for a multiplex addressing having a set of column lines with each column line connecting one of the electrochromic electrodes or counter-electrodes in said column, and a set of row lines with each row line connecting the other of the counter-electrodes or electrochromic electrodes in said row, comprising the steps of:

sequentially addressing each column line one at a time;

selectively providing write information at each row line for all electrochromic elements along said addressed column line desired to be written; and

providing erase information at the row lines for all electrochromic elements along said addressed column line for which write information is not provided;

whereby each electrochromic element in said display receives one of write information or erase information during said addressing step, to thereby reduce cross talk between electrochromic elements in said display.

2. The method according to claim 1 wherein the steps of providing write information and providing erase information are performed during overlapping time periods.

3. The method according to claim 1 wherein the step of providing write information and the step of providing erase information are performed during non-overlapping time periods.

4. The method according to claim 1 wherein the step of sequentially addressing each column line comprises connecting each column line to ground potential one at a time and wherein the steps of providing write information comprises connecting each row line to a positive voltage potential of approximately one volt.

5. The method according to claim 1 wherein the counter-electrode material is more electro-negative than the electrochromic material and wherein the erase information is obtained by a short circuit between the row lines and addressed column line.

6. An electrochromic display matrix system comprising:

an electrochromic display matrix having electrochromic elements arranged in at least two columns and at least two rows in a configuration suitable for multiplex addressing having a set of column lines with each column connecting one of the electrochromic electrodes or counter-electrodes in said column, and a set of row lines with each row line connecting the other of the counter-electrodes or electrochromic electrodes in said row;

means for sequentially addressing each column line one at a time;

means for selectively providing write information at each row line for all electrochromic elements along said address line desired to be written; and

means for providing erase information at the row lines for all electrochromic elements along said address column for which write information is not provided;

whereby each electrochromic element in said display receives one of said write information or erase information during addressing by said addressing means to thereby reduce cross talk between electrochromic elements in said display.

7. The system according to claim 6 wherein the means for sequentially addressing each column line one at a time comprises a sweep shift register.

8. The system according to claim 6 wherein

0084603

the means for providing erase information provides erase information for the addressed column during a time period which overalps with the time period during which the means for providing write information provides write information.

9. The system according to claim 6 wherein the counter-electrode is more electro-negative than the electrochromic material and wherein the erase information is obtained by providing a short circuit between the row lines and addressed column line.

10. The system according to claim 7 wherein the write information is a voltage pulse which is positive with respect to the voltage at said addressed column line and wherein the erase information is a voltage pulse which is negative with respect to the voltage at said addressed column line, but wherein the write voltage and erase voltage are substantially equal in magnitude.



Fig.1.

0084603

1/2

GLASS 12

ELEMENT 16 (UNDERSIDE)

10

22

SnO₂ CONDUCTOR

14

30

ELECTROLYTE 18

CARBON COUNTER ELECTRODE 20

18

24

32

CONDUCTOR 26

GLASS 28

Fig. 2.

0084603

| | DOCUMENTS CONSIDERED TO BE RELEVANT | | EP 82109410.9 |
|---|---|---|---|
| Category | Citation of document with indication, where appropriate, of relevant passages | Relevant to claim | CLASSIFICATION OF THE APPLICATION (Int. Cl. ³) |
| A | GB - A - 1 558 014 (XEROX) <br> * Fig. 2 * | 1,6 | G 02 F 1/17 <br> G 09 G 3/16 |
| A | DE - A1 - 2 756 763 (IBM) <br> * Claims * | 1,6 | |
| A | DE - B2 - 2 751 870 (IBM) <br> * Totality * | 1,6 | |
| A | EP - A1 0 000 616 (IBM) <br> * Totality * | 1,6 | |
| A | EP - A1 - 0 007 110 (TIMEX) <br> * Totality * | 1,6 | TECHNICAL FIELDS SEARCHED (Int. Cl. ³) |
| A | GB - A - 2 010 560 (KABUSHIKI) <br> * Fig. 5,6; pages 4,5 * | 1 | G 09 F 9/30 <br> G 02 F 1/00 |
| A | CH - B5 - 623 709 (BBC) <br> * Fig. 1; pages 3,4 * | 1 | |
| D,A | US - A - 4 129 861 (CYANAMID) | 1,4,6,7 | |

The present search report has been drawn up for all claims

| Place of search | Date of completion of the search | Examiner |
|---|---|---|
| VIENNA | 26-04-1983 | SCHMIDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503 03 82